# FASCICULE DE BREVET EUROPEEN

(11) **EP 0 795 435 B1**
(45) Date de publication et mention de la délivrance du brevet: **13.10.1999**
(21) Numéro de dépôt: 97400369.1
(22) Date de dépôt: 19.02.1997
(51) Int. Cl.: B60N 2/02

(54) **Siège pour véhicule automobile muni d'un dossier à position variable**
Einstellbare Rücklehne für Fahrzeugsitz
Adjustable vehicle seat backrest

(30) Priorité: 15.03.1996 FR 9603308
(43) Date de publication de la demande: 17.09.1997
(73) Titulaire: CESA COMPAGNIE EUROPEENNE DE SIEGES POUR AUTOMOBILES, 92307 Levallois-Perret Cédex (FR)
(72) Inventeur: Delatte, Olivier, 45290 Nogent-sur-Vernisson (FR); LE Bihan, Philippe, 45290 Nogent-sur-Vernisson (FR); Quenel, David, 45290 Nogent-sur-Vernisson (FR)
(74) Mandataire: Moncheny, Michel

(56) Documents cités:
- EP-A- 0 628 445
- FR-A- 2 722 150
- US-A- 3 973 799

## Description

La présente invention concerne un siège pour véhicule automobile muni d'un dossier à position variable.

Il est connu de FR-A-2 722 150 (N°. d'enregistrement national français 94 08 297) un siège pour véhicule automobile du type comprenant un dossier monté basculant sur une assise au moyen d'une articulation commandée par un organe rotatif actionnable dans un premier sens de réglage de l'inclinaison du dossier par rapport à l'assise et dans un second sens, opposé au premier, de rabattement temporaire de ce dossier vers l'assise, et du type comprenant des moyens de limitation de la course de rabattement du dossier.

Dans un véhicule automobile muni d'un siège avant de ce type, le rabattement temporaire du dossier vers l'assise permet l'accès aux places arrière de ce véhicule.

Les moyens de limitation de la course de rabattement du dossier maintiennent ce dernier dans une position inclinée par rapport à l'horizontale vers l'avant du siège. De cette manière, un occupant peut s'appuyer sur le dossier rabattu lorsqu'il accède aux places arrière du véhicule ou bien lorsqu'il quitte ces places arrière.

Habituellement, un siège avant de véhicule automobile est relié au plancher du véhicule au moyen d'une paire de glissières de positionnement longitudinal de ce siège. Certains types de siège avant comprennent des moyens de déverrouillage des glissières actionnés automatiquement sous l'effet du rabattement du dossier vers l'assise pour permettre le déplacement du siège vers l'avant de manière à faciliter l'accès aux places arrière.

On souhaite de plus en plus fréquemment pouvoir placer un siège dans différentes configuration d'utilisation, par exemple, une configuration en siège courant, adapté notamment à la conduite, ou bien une configuration en tablette. Cette dernière configuration est obtenue, dans certains types de sièges, en rabattant le dossier vers l'assise de manière à le placer dans une position sensiblement horizontale.

Cependant, dans le cas du siège du type cité initialement, les moyens de limitation de la course de rabattement du dossier empêchent de placer ce dernier dans une position sensiblement horizontale et donc d'obtenir une configuration en tablette.

De plus, dans l'hypothèse d'absence de moyens de limitation de la course de rabattement du dossier, le rabattement du dossier vers l'assise pour obtenir une configuration en tablette s'avère dans les sièges classiques, incompatible avec la fonction de déverrouillage automatique des glissières sous l'effet de ce rabattement.

L'invention a pour but de proposer un siège pour véhicule automobile muni d'un dossier susceptible d'être rabattu temporairement vers l'assise, la course de rabattement de ce dossier provoquant notamment le déverrouillage automatique des glissières et étant limitée à une position inclinée du dossier par rapport à l'horizontale, ceci sans empêcher la possibilité de placer le dossier dans une position sensiblement horizontale de manière à obtenir une configuration en tablette du siège.

A cet effet, l'invention a pour objet un siège pour véhicule automobile du type précité, caractérisé en ce que les moyens de limitation comprennent des premiers moyens de butée reliés au dossier et des seconds moyens de butée reliés à l'assise, ces seconds moyens étant déplaçables entre une position active dans laquelle, lors du rabattement du dossier, ils croisent la trajectoire des premiers moyens de butée, et une position escamotée dans laquelle ils sont écartés de cette trajectoire, le siège comportant de plus des moyens d'escamotage des seconds moyens de butée actionnés sous l'effet du déplacement de l'organe de commande dans le sens de réglage de l'inclinaison du dossier.

Suivant d'autres caractéristiques de l'invention:
- les seconds moyens de butée comportent une bascule montée pivotante sur un support solidaire de l'assise, munie d'un premier bras de butée déplaçable entre une position active dans laquelle, lors du rabattement du dossier, il croise la trajectoire des premiers moyens de butée, et une position escamotée dans laquelle il est écarté de cette trajectoire, et les moyens d'escamotage comportent une came solidaire en rotation de l'organe de commande coopérant avec une contre-came portée par un second bras de manoeuvre de la bascule sous l'effet du déplacement de l'organe de commande dans le sens de réglage de l'inclinaison du dossier;
- la course du bras de butée de la bascule est limitée par les extrémités d'une boutonnière ménagée dans le support dans laquelle est guidé un doigt de fin de course porté par le bras de butée ;
- les premiers moyens de butée comprennent un élément d'armature du dossier ;
- le siège est relié à au moins une glissière de positionnement longitudinal du siège et comporte des moyens de commande de déverrouillage de la glissière actionnés sous l'effet du déplacement de l'organe de commande dans le sens de rabattement temporaire du dossier;
- les moyens de commande de déverrouillage de la glissière comprennent un levier de commande monté pivotant sur le support solidaire de l'armature, autour d'un même axe que la bascule, entre une position de repos de verrouillage de la glissière et une position active de déverrouillage de cette glissière, le levier de commande étant relié au bras de manoeuvre de la bascule par des moyens de couplage à boutonnière permettant, d'une part, sous l'effet du déplacement de l'organe de commande dans le sens de rabattement temporaire du dossier, une course active de la bascule par rapport au levier entraînant ce levier vers une position de déverrouillage de la glissière, et d'autre part, sous l'effet du déplacement de l'organe de commande dans le sens de réglage de l'inclinaison du dossier, une course morte de la bascule par rapport au levier, opposée à sa course active ;
- les moyens de couplage à boutonnière comprennent une boutonnière ménagée dans le levier de commande dans laquelle est guidée une broche de couplage formant la contre-came ;
- le bras de butée et le levier de commande sont rappelés élastiquement, respectivement, en position active et en position de repos.

L'invention sera mieux comprise à la lecture de la description qui va suivre donnée uniquement à titre d'exemple et faite en se référant aux dessins annexés dans lesquels :
- la figure 1 est une vue schématique en élévation d'un siège selon l'invention ;
- la figure 2 est une vue de détail, à échelle agrandie, suivant la flèche 2 de la figure 1, des moyens de limitation de la course de rabattement du dossier du siège représentés sur la figure 1 ;
- les figures 3 à 5 sont des vues suivant la flèche 3 de la figure 2, dans différentes configurations des moyens de limitation de la course de rabattement du dossier.

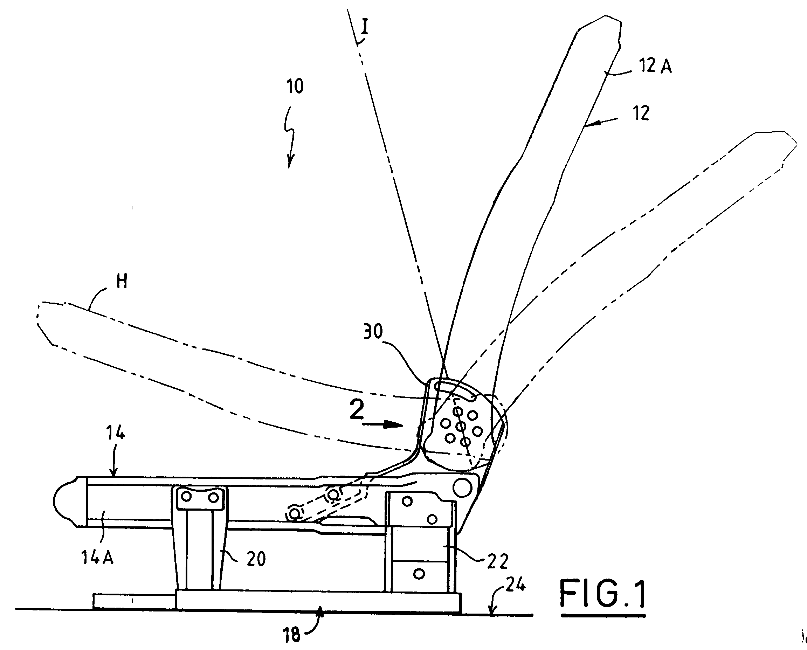

On a représenté sur la figure 1 un siège avant 10 selon l'invention agencé dans l'habitacle d'un véhicule automobile.

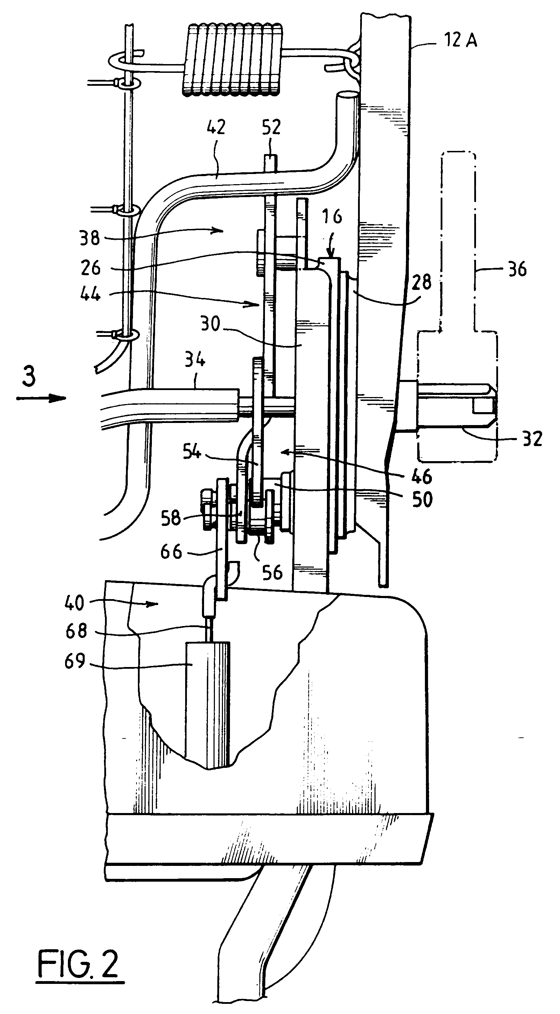

De façon classique, le siège 10 comprend un dossier 12 monté basculant sur une assise 14 au moyen d'une paire d'articulations 16 dont l'une d'elles est représentée à la figure 2.

Pour des raisons de clarté, on a représenté sur les figures uniquement les armatures 12A,14A du dossier et de l'assise, sans les matelassures qui les recouvrent.

Dans ce qui suit, les orientations avant et arrière correspondent aux orientations habituelles d'un occupant assis dans le siège 10.

L'assise 14 est reliée à une paire de glissières classiques 18 par l'intermédiaire de pieds avant 20 et arrière 22. Ces glissières permettent le positionnement longitudinal du siège et sont reliées de façon connue en soi à un plancher 24 de l'habitacle du véhicule.

Les articulations 16 sont de type connu décrit par exemple dans le document précité FR-A-2 722 150.

En se référant aux figures 1 et 2, on voit que chaque articulation 16 comprend deux flasques 26,28 dont l'un est fixé sur une ferrure 30 solidaire de l'armature 14A d'assise et l'autre est fixé sur l'armature 12A de dossier. Les flasques 26,28 sont rotatifs l'un par rapport à l'autre.

Les flasques 26,28 délimitent entre eux un logement pour des moyens de couplage de ces flasques non représentés sur les figures. Ces moyens sont commandés par un organe 32 formant une broche d'axe coïncidant avec l'axe de basculement du dossier.

Les organes de commande 32 des deux articulations 16 sont couplés entre eux à l'aide de moyens classiques 34.

Une poignée de commande 36, commune aux deux articulations 16, est fixée sur l'organe de commande 32 illustré sur la figure 2.

Dans ce qui suit, toute référence à une articulation 16 concernera celle illustrée sur la figure 2.

L'organe de commande 32 est actionnable, par rotation autour de son axe, dans deux sens opposés, à savoir un premier sens horaire de réglage de l'inclinaison du dossier par rapport à l'assise et un second sens anti-horaire de rabattement temporaire de ce dossier vers l'assise.

Le siège 10 comporte des moyens 38 de limitation de la course de rabattement du dossier 12. Ces moyens 38 permettent, lorsque l'organe de commande 32 est actionné dans le sens de rabattement temporaire du dossier (sens anti-horaire), de limiter le basculement du dossier 12 à une position I, schématisée par un trait mixte sur la figure 1, dans laquelle le dossier est incliné par rapport à l'horizontale vers l'avant.

Le siège 10 comporte également des moyens 40 de déverrouillage des glissières 18 actionnés sous l'effet du déplacement de l'organe de commande 32 dans le sens de rabattement temporaire du dossier (sens anti-horaire).

Les moyens 38 et 40 seront décrits ci-dessous en se référant aux figures 2 à 5.

Les moyens 38 de limitation de la course de rabattement du dossier 12 comprennent des premiers moyens de butée reliés au dossier 12 comportant, par exemple, un tronçon 42 sensiblement transversal d'une tige pliée de l'armature 12A du dossier.

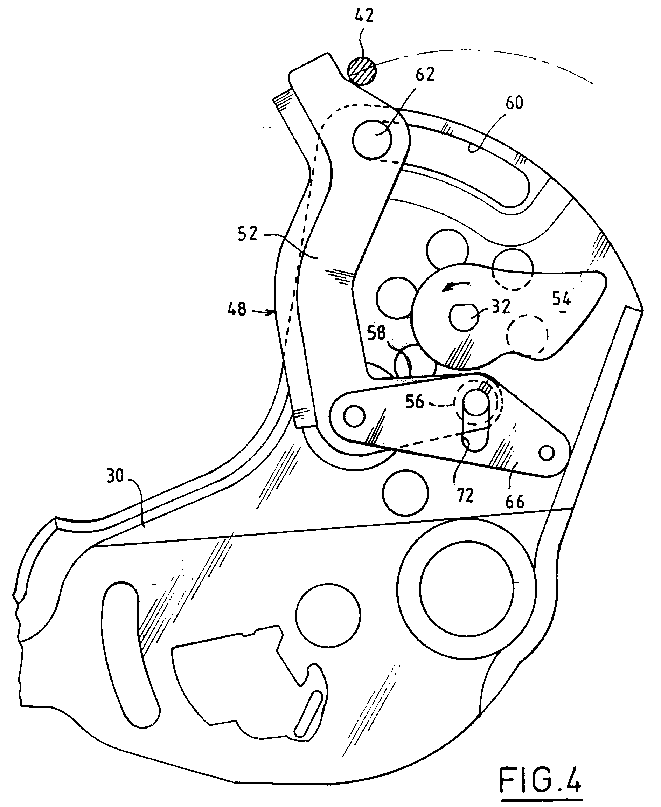

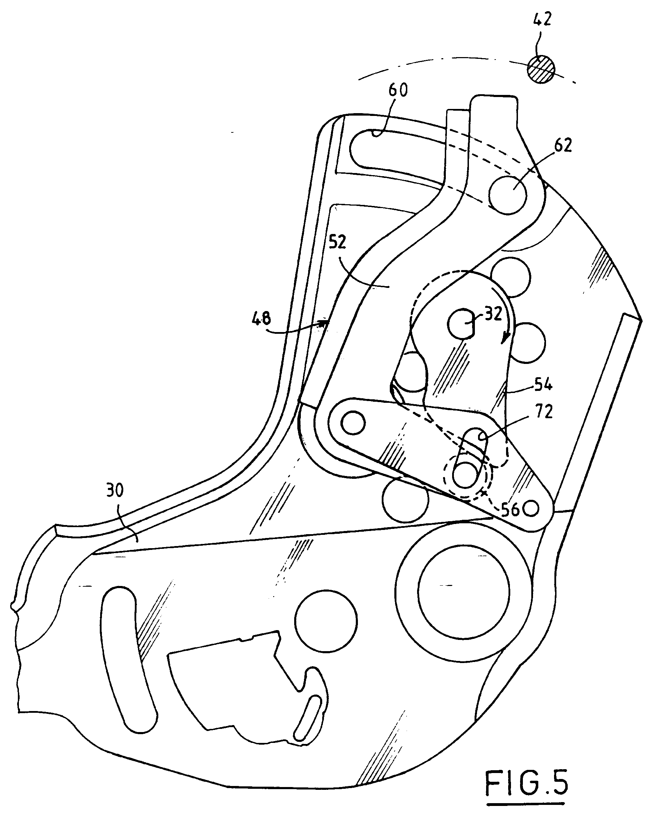

Les moyens 38 comprennent également des seconds moyens de butée 44 reliés à l'assise 14, déplaçables entre une position active dans laquelle, lors du rabattement du dossier vers l'assise, ils croisent la trajectoire des premiers moyens de butée 42, comme cela est représenté sur les figures 2 et 4, et une position escamotée dans laquelle ils sont écartés de cette trajectoire, comme cela est représenté sur la figure 5.

Les seconds moyens de butée 44 sont escamotables à l'aide de moyens 46 actionnés sous l'effet du déplacement de l'organe de commande 32 dans le sens de réglage de l'inclinaison du dossier (sens horaire).

Dans l'exemple illustré, les seconds moyens de butée 46 comportent une bascule 48 montée pivotante sur la ferrure 30 au moyen d'un pivot 50. Cette bascule 48 est munie d'un premier bras de butée 52 déplaçable entre une position active dans laquelle, lors du rabattement du dossier, il croise la trajectoire du premier moyen de butée 42, et une position escamotée dans laquelle il est écarté de cette trajectoire.

Les moyens 46 d'escamotage de ce bras de butée 52 comportent une came 54 solidaire en rotation de l'organe de commande 32 coopérant avec une contre-came 56 portée par un second bras de manoeuvre 58 de la bascule, sensiblement perpendiculaire au bras de butée 52.

La course du bras de butée 52 est limitée par les extrémités d'une boutonnière curviligne 60 ménagée dans la ferrure 30, dans laquelle est guidé un doigt 62 de fin de course porté par ce bras de butée 52.

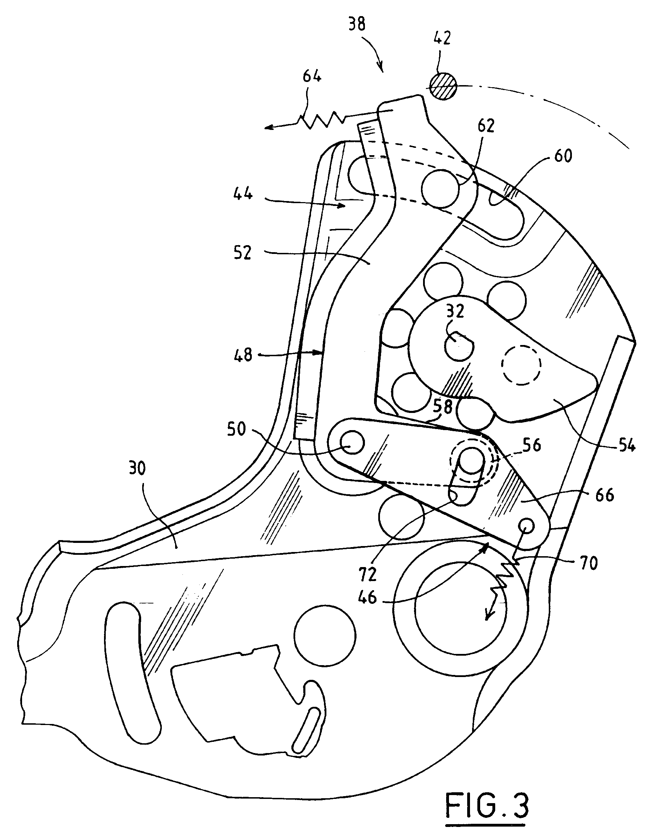

Le bras de butée 52 est rappelé élastiquement en position active au moyen d'un ressort 64 à effet angulaire schématisé sur la figure 3.

Les moyens 40 de commande de déverrouillage des glissières 18 comprennent un levier de commande 66 monté pivotant sur la ferrure 30 autour du même pivot 50 et du même axe que la bascule 48.

L'extrémité libre du levier de commande 66 est reliée à un dispositif classique de déverrouillage des glissières (non représenté sur les figures) au moyen d'un câble 68 de type "Bowden" logé dans une gaine 69.

Le levier de commande 66 est déplaçable entre une position de repos de verrouillage des glissières 18 et une position active de déverrouillage de ces glissières.

Le levier de commande 66 est rappelé élastiquement en position de repos par un ressort 70 sollicitant le câble 68 et schématisé sur la figure 3.

On notera que les ressorts 64 et 70 sollicitent, respectivement, le bras de butée 52 et le levier de commande 66 dans des sens de rotation opposés.

Le levier de commande 66 est relié au bras de manoeuvre 58 par des moyens de couplage à boutonnière permettant, d'une part, une course active de la bascule 48 dans le sens anti-horaire entraînant le levier 66 vers sa position de déverrouillage des glissières, et d'autre part, une course morte de la bascule 48 par rapport au levier 66, opposée à sa course active.

Dans l'exemple illustré, les moyens de couplage à boutonnière comprennent une boutonnière 72 dans laquelle est guidée une broche de couplage formant la contre-came 56.

On décrira maintenant le fonctionnement du siège 10 selon l'invention en se référant plus spécialement aux figures 3 à 5. Le fonctionnement d'une articulation 16 est décrit par exemple dans le document précité FR-A-2 722 150.

Initialement, l'articulation 16 et l'organe de commande 32 sont au repos dans la configuration illustrée à la figure 3.

Le bras de butée 52 et le levier 66 de commande de déverrouillage des glissières sont maintenus, respectivement, dans leur position active et de repos sous l'effet des ressorts 64 et 70.

Pour rabattre temporairement le dossier 12 vers l'assise 14, on actionne la poignée 36 de manière à entraîner l'organe de commande 32 dans le sens anti-horaire représenté par une flèche sur la figure 4.

Les premiers moyens de butée 42 viennent au contact du bras de butée 52 et l'entraînent dans un sens anti-horaire jusqu'à ce que ce bras de butée 52 soit immobilisé par coopération du doigt de fin de course 62 avec l'extrémité avant de la boutonnière curviligne 60, comme cela est représenté sur la figure 4.

Le dossier 12 est alors maintenu dans la position I illustrée à la figure 1. Le déplacement dans le sens anti-horaire du bras de butée 52 correspond à une course active de la bascule 48 provoquant l'entraînement du levier 66, dans le sens anti-horaire, vers sa position de déverrouillage des glissières, comme cela est représenté sur la figure 4.

Un occupant souhaitant accéder aux places arrière du véhicule ou bien s'extraire de ces places arrière, peut prendre appui sur le dossier 12 rabattu après avoir poussé le siège 10 vers l'avant pour augmenter le dégagement permettant l'accès à l'arrière du véhicule.

Pour régler l'inclinaison du dossier 12 par rapport à l'assise 14, on actionne la poignée 36 dans le sens inverse au cas précédent, de manière à entraîner l'organe de commande 32 dans le sens horaire représenté par une flèche sur la figure 5.

Sous l'effet du déplacement de l'organe de commande 32, la came 54 est entraînée dans le sens horaire et vient au contact avec la contre-came 56 de manière à déplacer la bascule 48 dans le sens horaire jusqu'à ce que le doigt de fin de course 62 soit au contact de l'extrémité arrière de la boutonnière curviligne 60, comme cela est représenté sur la figure 5. Le bras de butée 52 est alors en position escamotée écartée de la trajectoire du premier moyen de butée 42.

Le déplacement de la bascule 48 dans le sens horaire est sans effet sur le levier de commande 66 du fait que la boutonnière 72 permet une course morte de la bascule par rapport au levier 66. Le levier 66 reste donc dans sa position de repos et les glissières 18 sont verrouillées.

On peut alors régler l'inclinaison du dossier 12 de manière à le placer dans une position H sensiblement horizontale telle que représentée sur la figure 1 en le faisant basculer vers l'avant, au-delà de la position I.

Une fois le dossier en position horizontale, éventuellement au contact de butées non représentées, la poignée 36 est relâchée ce qui provoque le verrouillage des articulations 16.

L'invention ne se limite pas au mode de réalisation décrit précédemment.

En effet, le levier de commande 66 peut être supprimé, le câble 68 étant directement relié à l'extrémité libre du bras de manoeuvre 58. Dans ce cas, le déplacement dans le sens anti-horaire du bras de manoeuvre provoque une traction sur le câble 68 et un déverrouillage des glissières, et le déplacement dans le sens horaire de ce bras de manoeuvre repousse légèrement le câble 68, ce qui est sans conséquence notable lorsque la longueur hors gaine du câble 68 est suffisante.

L'invention comporte de nombreux avantages.

En particulier, elle permet, d'une part, de réaliser simultanément le rabattement temporaire du dossier vers l'assise et le déverrouillage des glissières du siège, et d'autre part, le réglage de l'inclinaison du dossier par rapport à l'assise notamment pour obtenir une configuration du siège en tablette dans laquelle le dossier est sensiblement horizontal.

## Revendications

1. Siège pour véhicule automobile du type comprenant un dossier (12) monté basculant sur une assise (14) au moyen d'une articulation (16) commandée par un organe rotatif (32) actionnable dans un premier sens de réglage de l'inclinaison du dossier par rapport à l'assise et dans un second sens, opposé au premier, de rabattement temporaire de ce dossier vers l'assise, et du type comprenant des moyens (38) de limitation de la course de rabattement du dossier, caractérisé en ce que les moyens (38) de limitation comprennent des premiers moyens de butée (42) reliés au dossier (12) et des seconds moyens de butée (44) reliés à l'assise (14), ces seconds moyens (44) étant déplaçables entre une position active dans laquelle, lors du rabattement du dossier, ils croisent la trajectoire des premiers moyens de butée (42), et une position escamotée dans laquelle ils sont écartés de cette trajectoire, le siège comportant de plus des moyens (46) d'escamotage des seconds moyens de butée (44) actionnés sous l'effet du déplacement de l'organe de commande (32) dans le sens de réglage de l'inclinaison du dossier (12).

2. Siège selon la revendication 1, caractérisé en ce que les seconds moyens de butée (44) comportent une bascule (48) montée pivotante sur un support (30) solidaire de l'assise (14), munie d'un premier bras de butée (52) déplaçable entre une position active dans laquelle, lors du rabattement du dossier, il croise la trajectoire des premiers moyens de butée (42), et une position escamotée dans laquelle il est écarté de cette trajectoire, et en ce que les moyens (46) d'escamotage comportent une came (54) solidaire en rotation de l'organe de commande (32) coopérant avec une contre-came (56) portée par un second bras de manoeuvre (58) de la bascule (48) sous l'effet du déplacement de l'organe de commande (32) dans le sens de réglage de l'inclinaison du dossier (12).

3. Siège selon la revendication 2, caractérisé en ce que la course du bras de butée (52) de la bascule est limitée par les extrémités d'une boutonnière (60) ménagée dans le support (30) dans laquelle est guidé un doigt de fin de course (62) porté par le bras de butée (52).

4. Siège selon l'une quelconque des revendications précédentes, caractérisé en ce que les premiers moyens de butée comprennent un élément d'armature (42) du dossier (12).

5. Siège selon l'une quelconque des revendications précédentes, caractérisé en ce qu'il est relié à au moins une glissière (18) de positionnement longitudinal du siège et en ce qu'il comporte des moyens (40) de commande de déverrouillage de la glissière (18) actionnés sous l'effet du déplacement de l'organe de commande (32) dans le sens de rabattement temporaire du dossier (12).

6. Siège selon les revendications 2 et 5 prises ensemble, caractérisé en ce que les moyens (40) de commande de déverrouillage de la glissière (18) comprennent un levier de commande (66) monté pivotant sur le support (30) solidaire de l'armature (14), autour d'un même axe que la bascule (48), entre une position de repos de verrouillage de la glissière et une position active de déverrouillage de cette glissière, le levier de commande (66) étant relié au bras de manoeuvre (58) de la bascule par des moyens (56,72) de couplage à boutonnière permettant, d'une part, une course active de la bascule (48) entraînant le levier (66) vers une position de déverrouillage de la glissière, et d'autre part, une course morte de la bascule (48) par rapport au levier (60), opposée à sa course active.

7. Siège selon la revendication 6, caractérisé en ce que les moyens de couplage à boutonnière comprennent une boutonnière (72) ménagée dans le levier de commande (66) dans laquelle est guidée une broche de couplage (56) formant la contre-came.

8. Siège selon la revendication 6 ou 7, caractérisé en ce que le bras de butée (52) et le levier de commande (66) sont rappelés élastiquement, respectivement, en position active et en position de repos.

## Claims

1. Seat for an automotive vehicle of the type comprising a backrest (12) mounted to tilt on a seatbase (14) by means of an articulation (16) controlled by a rotating device (32) which is actuatable in a first direction of adjustment of the inclination of the backrest with regard to the seatbase and in a second direction, opposite to the first, of temporary hinging of this backrest towards the seatbase, and of the type comprising limitation means (38) for the travel of the hinging of the backrest, characterised in that the limitation means (38) comprise first limit stop means (42) connected to the backrest (12) and second limit stop means (44) connected to the seatbase (14), these second means (44) being moveable between an operative position in which, at the time of hinging of the backrest, they cross the trajectory of the first limit stop means (42), and a retracted position in which they are separated from this trajectory, the seat comprising also retraction means (46) for the second limit stop means (44), activated by the action of the displacement of the control member (32) in the direction of adjustment of the inclination of the backrest (12).

2. Seat according to claim 1, characterised in that the second limit stop means (44) comprise a rocker (48) mounted to pivot on an interdependent support (30) of the seatbase (14), equipped with a first stop arm (52) which is displaceable between an operative position in which, at the time of the hinging of the backrest, said stop arm (52) crosses the trajectory of the first limit stop means (42), and a retracted position in which it is separated from this trajectory, and in that the retraction means (46) comprise a cam (54) which is interdependent as regards rotation with the control device (32) and co-operates with a counter cam (56) carried by a second actuation arm (58) of the rocker (48) by the action of the displacement of the control device (32) in the direction of adjustment of the inclination of the backrest (12).

3. Seat according to claim 2, characterised in that the travel of the stop arm (52) of the rocker is limited by the ends of an oblong opening (60) recessed in the support (30) in which there is guided a limit-of-travel pin (62) which is carried by the stop arm (52).

4. Seat according to any of the preceding claims, characterised in that the first limit stop means comprise a reinforcement element (42) of the backrest (12).

5. Seat according to any of the preceding claims, characterised in that it is connected to at least one slide rail (18) for the longitudinal positioning of the seat and in that it comprises the release control means (40) of the slide rail (18) operated by the action of the displacement of the control device (32) in the direction of temporary hinging of the backrest (12).

6. Seat according to claims 2 and 5 taken together, characterised in that the release control means (40) of the slide rail (18) comprise a control lever (66) which is mounted to pivot on the integral support (30) of the frame (14), about the same axis as the rocker (48), between a non-operative position of the release of the slide rail and an operative position of the release of this slide rail, the control lever (66) being connected to the actuation arm (58) of the rocker by coupling means (56, 72) with an oblong opening allowing, on the one hand, an activated travel of the rocker (48) drawing the lever (66) towards a release position of the slide rail, and, on the other hand, a non-activated travel of the rocker (48) with regard to the lever (60), opposite to its activated travel.

7. Seat according to claim 6, characterised in that the coupling means with an oblong opening comprise an oblong opening (72) recessed in the control lever (66) in which a coupling spindle (56) forming the counter cam is guided.

8. Seat according to claim 6 or 7, characterised in that the stop arm (52) and the control lever (66) are drawn back resiliently between an operative position and a non-operative position respectively.

## Patentansprüche

1. Sitz für ein Kraftfahrzeug mit einer Rückenlehne (12), die an einem Sitzteil (14) mittels eines Drehgelenks (16) kippbar ist, das durch ein Drehorgan (32) gesteuert ist, das in eine erste Neigungseinstellungsrichtung der Rückenlehne relativ zu dem Sitzteil und in einer zweiten Richtung entgegengesetzt zur ersten Richtung zum vorübergehenden Umklappen dieser Sitzlehne in Richtung auf das Sitzteil betätigbar ist, und mit einer Einrichtung (38) zur Begrenzung der Umklappbewegungsbahn der Rückenlehne, dadurch gekennzeichnet, daß die Begrenzungseinrichtung (38) eine erste Anschlageinrichtung (42) umfaßt, die mit der Rückenlehne (12) verbunden ist, und eine zweite Anschlageinrichtung (44), die mit dem Sitzteil (14) verbunden ist, wobei die zweite Einrichtung (44) zwischen einer aktiven Position, in welcher sie beim Umklappen der Rückenlehne die Bewegungsbahn der ersten Anschlageinrichtung (42) kreuzt, und einer eingezogenen Position verschiebbar ist, in welcher sie von dieser Bewegungsbahn beabstandet ist, wobei der Sitz außerdem eine Einrichtung (46) zum Zurückziehen der Anschlageinrichtung (44) betätigt unter Einwirkung der Verschiebung des Steuerorgans (32) in der Richtung zur Einstellung der Neigung der Rückenlehne (12) umfaßt.

2. Sitz nach Anspruch 1, dadurch gekennzeichnet, daß die zweite Anschlageinrichtung (44) eine Wippe (48) umfaßt, die an einem Träger (30) schwenkbar angebracht ist, der fest mit dem Sitzteil (14) verbunden ist, wobei die Wippe mit einem ersten Anschlagarm (52) versehen ist, der zwischen einer aktiven Position, in welcher er beim Umklappen der Rückenlehne die Bewegungsbahn der ersten Anschlageinrichtung (42) kreuzt, und einer eingezogenen Position verschiebbar ist, in welcher er von dieser Bewegungsbahn beabstandet ist, und daß die Einrichtung (46) zum Einziehen eine Nocke (54) umfaßt, die drehfest mit dem Steuerorgan (32) verbunden ist, das mit einer Gegennocke (56) zusammenwirkt, die durch einen zweiten Steuerarm (58) der Wippe (48) getragen ist, unter Einwirkung der Verschiebung des Steuerorgans (32) in der Einstellrichtung der Neigung der Rückenlehne (12).

3. Sitz nach Anspruch 2, dadurch gekennzeichnet, daß die Bewegungsbahn des Anschlagarms (52) der Wippe durch die Enden einer länglichen Aussparung (60) begrenzt ist, die in dem Träger (30) ausgebildet ist, in welcher ein Bewegungsbahn-Begrenzungszapfen (62) geführt ist, der durch den Anschlagarm (52) getragen ist.

4. Sitz nach einem der vorangehenden Ansprüche, dadurch gekennzeichnet, daß die erste Anschlageinrichtung ein Beschlagelement (42) der Rückenlehne (82) umfaßt.

5. Sitz nach einem der vorangehenden Ansprüche, dadurch gekennzeichnet, daß er mit zumindest einer Stellschiene (18) zur Längspositionierung des Sitzes verbunden ist, und daß er eine Steuereinrichtung (40) für die Entriegelung der Stellschiene (18) umfaßt, die unter Einwirkung der Verschiebung des Steuerorgans (32) in Richtung des vorübergehenden Umklappens der Rückenlehne (12) betätigt ist.

6. Sitz nach Anspruch 2 in Verbindung mit Anspruch 5, dadurch gekennzeichnet, daß die Einrichtung (40) zur Steuerung der Entriegelung der Stellschiene (18) einen Steuerhebel (66) umfaßt, der schwenkbar auf dem Träger (30), der fest mit dem Beschlag (14) verbunden ist, um dieselbe Achse wie die Wippe (48) angebracht ist, und zwar zwischen einer Ruhestellung zur Verriegelung der Stellschiene und einer aktiven Position zur Entriegelung dieser Stellschiene, wobei der Steuerhebel (66) mit einem Steuerarm (58) für die Wippe durch eine Einrichtung (56, 72) zur Kupplung mit einer länglichen Aussparung verbunden ist, die einerseits eine aktive Bewegung der Wippe (48) unter Mitnahme des Hebels (66) in eine Position zur Entriegelung der Stellschiene und andererseits eine verlorene Bewegung der Wippe (48) relativ zu dem Hebel (60) entgegengesetzt zu ihrer aktiven Bewegung erlaubt.

7. Sitz nach Anspruch 6, dadurch gekennzeichnet, daß die Kupplungseinrichtung mit einer länglichen Aussparung eine längliche Aussparung (72) umfaßt, die in dem Steuerhebel (66) ausgebildet ist, in der ein Kupplungsbolzen (56) geführt ist, welcher die Gegennocke bildet.

8. Sitz nach Anspruch 6 oder 7, dadurch gekennzeichnet, daß der Anschlagarm (52) und der Steuerhebel (66) elastisch in die aktive Position bzw. die Ruheposition vorgespannt sind.
